# EUROPÄISCHE PATENTSCHRIFT

(11) **EP 0 999 153 B1**
(45) Veröffentlichungstag und Bekanntmachung des Hinweises auf die Patenterteilung: **07.04.2004**
(21) Anmeldenummer: 99121465.1
(22) Anmeldetag: 28.10.1999
(51) Int. Cl.: B65G 47/84

(54) **Übergabestern zum Transportieren von Gefässen**
Transfer-star for conveying containers
Roue à étoile de transfert pour transporter de conteneurs

(30) Priorität: 03.11.1998 DE 19850539
(43) Veröffentlichungstag der Anmeldung: 10.05.2000
(73) Patentinhaber: KHS Maschinen- und Anlagenbau Aktiengesellschaft, 44143 Dortmund (DE)
(72) Erfinder: Sindermann, Siegmar, 59174 Kamen (DE); Stock, Klaus-Friedrich, 44289 Dortmund (DE)

(56) Entgegenhaltungen:
- DE-A- 19 542 337
- DE-U- 29 808 212

## Beschreibung

Die Erfindung betrifft einen Übergabestern zum Transportieren von Gefäßen gemäß dem Oberbegriff der Ansprüche 1 und 2.

Gegenstände, wie insbesondere Getränkeflaschen, sind oftmals nach vorgegebenen Kriterien zu sortieren. So müssen wieder zu befüllende Getränkeflaschen daraufhin untersucht werden, ob in ihnen Flüssigkeiten enthalten waren oder sind, wie Chemikalien, Benzin etc., die eine Wiederverwendung als Getränkeflasche absolut ausschließen, da derartige Flüssigkeiten gefährlich sind und/oder der Restgeschmack solcher Flüssigkeiten nicht entfernt werden kann. Dies gilt insbesondere bei Tafelwasserflaschen, die praktisch nur mit Tafelwasser befüllt werden können; selbst wenn schon Säfte oder Limonaden in solchen Flaschen enthalten waren, so ist deren Geschmack, wenn eine Wiederbefüllung mit Tafelwasser erfolgt, feststellbar, störend und daher unerwünscht. Verfahren und Vorrichtungen zum Prüfen derartiger Flaschen auf Fremstoffanteile sind an sich bekannt. Aufgrund einer solchen Prüfung ist eine Vorrichtung zum Sortieren der Gegenstände, nämlich insbesondere der Getränkeflaschen, derart zu steuern, daß nicht erneut brauchbare, d. h. nicht wiederbefüllbare Getränkeflaschen ausgeworfen werden, beispielsweise in einen Container, wo sie einem stofflichen Recycling zugeführt werden oder aber über einen ersten Weg abgetrennt werden und von einem anschließenden Förderer weiterbewegt werden. Flaschen, die wiederbefüllt werden können, müssen über einen zweiten Weg abgegeben werden, wobei die Reihenfolge der Abgabewege nicht fest ist.

Für die vorgenannten Zwecke werden Vorrichtungen zum Transportieren von Gegenständen eingesetzt, die zumindest einen Förderer aufweisen, der an Übergabepositionen für die Gegenstände Einrichtungen aufweist, mit denen gezielt Gegenstände aufgenommen oder nicht aufgenommen bzw. abgegeben oder nicht abgegeben werden können bzw. der der Strom der Gegenstände in mehrere Einzelströme aufgespalten werden kann.
Eine gattungsgemäße Vorrichtung ist aus der DE 23 40 796 B2 bekannt, die eine Vorrichtung zum Transport von Behältern, insbesondere Flaschen, mit einem Stemrad mit einer Vielzahl von an dessen Umfang angeordneten Ausnehmungen zeigt, wobei jeder Ausnehmung in einer Ausgestaltung beidseits an den Behältern symmetrisch angreifende, um unmittelbar am Förderer befindliche Schwenkachsen verschwenkbare Greifer zugeordnet sind. Die Greifer sind über einerseits an ihnen, andererseits an einer gemeinsamen radial zum Stemrad entlang ihrer Haupterstrekkungsrichtung verschiebbaren Betätigungsstange derart angelenkt, daß ein Kniehebelmechanismus gebildet wird. Bei dieser Vorrichtung liegt zum Verstellen der Finger oder Greifer aus ihrer Schließ- in die Öffnungsstellung ein die Betätigungsstange aktiv linear verschiebender Hebel vor.

Die DE-AS 14 82 616 zeigt eine Vorrichtung zum mittigen Festhalten von Flaschen verschiedenen Durchmessers in Füll-, Verschließ- oder dergleichen Maschinen mittels kraftschlüssig sich beidseitig an den Flaschenkörper anlegender Greiferzangen, die durch eine Kurvenbahn gesteuert sind und mittels der zu greifenden Flasche zugewandter, als Widerlager für diese dienender, auf radial nach außen gerichteten Vorsprüngen angeordneter Anlegerollen, die an einem mittels einer von der Steuerung der Greiferzange unabhängigen Kurvenbahn radial zur Maschinenlängsachse verschiebbaren Träger angeordnet sind. Bei dieser Vorrichtung sind keine stabilen Schließ- und Öffnungsstellen vorhanden. Die Öffnungsstellung wird dort durch die Einwirkung der Nockenkurve entgegen Fedem gehalten, während die Schließstellung gerade durch eine Feder bewirkt wird, so daß keine stabile Stellung gegeben ist, die auch ohne Einwirkung äußerer Kräfte beibehalten wird. Die DE 43 04 432 A1 zeigt eine Vorrichtung mit einem Kreisförderer mit am Umfang angeordneten teilkreisförmigen Aufnahmen. Die in diesen Aufnahmen eingreifenden Gegenstände, wie Flaschen, können von einem Finger teilbogenförmig umgriffen werden. Sie werden von diesem Finger nicht festgehalten, sondern müssen auf einer in einer unteren Ebene angeordneten Platte, die radial und umfangsmäßig im Bereich der Aufnahme vorgesehen ist, stehen, damit sie nicht herunterfallen; der Finger ist an einem gelenkigen, mehrteiligen Hebelmechanismus ausgebildet.

Schließlich ist aus der DE-A-195 42 337 ein Transportstem für Gefäße bekanntgeworden, bei dem am Umfang eines drehbaren Grundkörpers mehrere steuerbare Greifzangen mit elastischen Greifarmen angeordnet sind. Zwischen den zusammengehörenden Greifarmen ist ein Spreizkörper angeordnet, der zwischen einer Öffnungsposition und einer Schließposition bewegbar ist.

Der Erfindung liegt die Aufgabe zugrunde, eine verbesserte Vorrichtung zum Greifen von Gefäßen zu schaffen, die einen einfachen konstruktiven Aufbau aufweist und einen leichten Austausch der Greifarme wie auch ihrer zugeordneten Bauteile zuläßt. Erfindungsgemäß wird diese Aufgabe bei einer Vorrichtung der eingangs genannten Art dadurch gelöst, daß die Greifarme eine zum Zentrum des Haltekörpers weisende Befestigungsstelle und von dieser auf Abstand in Richtung der Greifarmenenden angeordnete Steuerebene aufweisen, wobei Steuemocken von außen gegen die Greifarme im Sinne einer Schließbewegung gegen diese heranführbar sind.

In selbständiger Ausbildung der Erfindung wird femer vorgeschlagen, daß die Greifarme eine zum Zentrum des Haltekörpers weisende Befestigungsstelle und eine zu dieser auf Abstand angeordnete Gegendruckstelle und von dieser auf Abstand in Richtung der Greifarmenden angeordnete Steuerebene aufweisen, wobei mindestens ein Steuernocken von außen gegen die Greifarme im Sinne einer Schließbewegung gegen diese heranführbar sind.

Durch die freibewegliche Lagerung der Greifarme und die Ansteuerung von außen wird der Gesamtaufbau der Vorrichtung wesentlich vereinfacht. Hinzu kommt, daß durch die außermittige Anordnung des Steuernockens eine wesentlich frühere Ansteuerung möglich ist und damit die Flaschen entsprechend früher gehalten oder aber auch gelöst werden können.

In Weiterbildung der Erfindung ist vorgesehen, daß die Steuereinheit aus einem ansteuerbaren Steuemocken besteht, der am Außenmantel mindestens eines Greifarmes angreift.

Ferner ist vorgesehen, daß die Steuereinheit aus einem Steuemocken besteht, der bei Verschwenken eines Greifarmes ein Element für den zweiten Greifarm mitbetätigt.

Weitere Merkmale der Erfindung ergehen aus den verbleibenden Unteransprüchen.

Im nachfolgenden wird die Erfindung anhand eines in der Zeichnung dargestellten Ausführungsbeispiels näher erläutert.

In der Zeichnung zeigt:
- Figur 1: eine Seitenansicht,
- Figur 2: eine Draufsicht und
- Figur 3: eine Variante zu Figur 1 und 2.

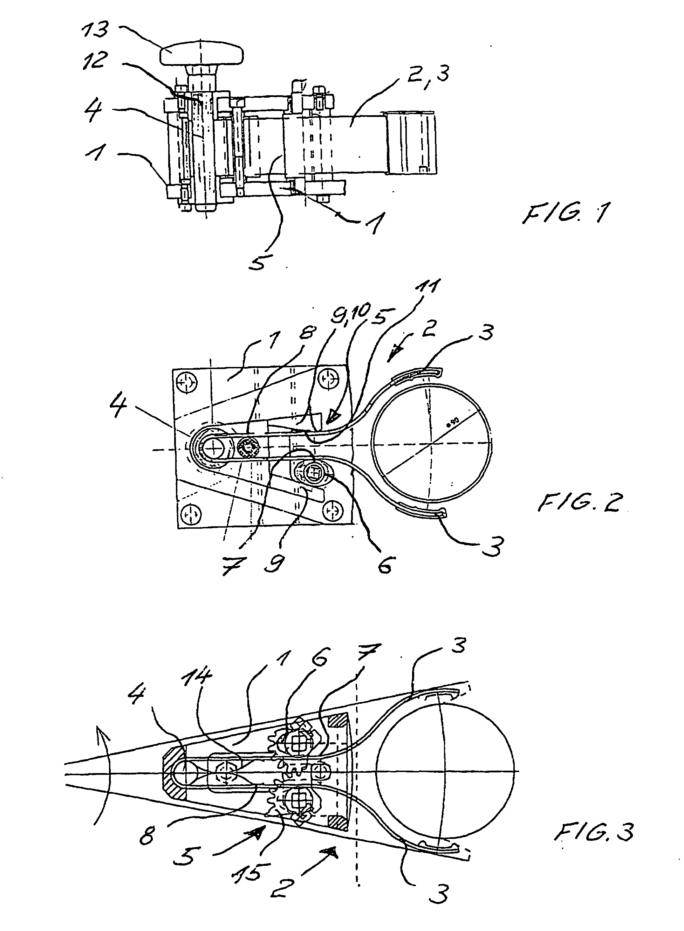

Der nur auszugsweise dargestellte Übergabestem besteht aus einem rotierenden Haltekörper 1 und daran austauschbar an seinem Außenumfang befestigten Greifereinheiten 2 mit elastischen Greifarmen 3, die eine zum Zentrum dieses Haltekörpers 1 weisende Befestigungsstelle 4 besitzen. Auf Abstand in Richtung der Greifarmenden ist die eigentliche Steuerebene 5 vorgesehen, wobei mindestens ein Steuernocken 6 gegen den Außenmantel 7 der Greifarme 3 im Sinne einer Schließbewegung gegen diese heranführbar ist. Neben der eigentlichen Befestigungsstelle 4 kann zusätzlich eine zu dieser auf Abstand angeordnete Gegendruckstelle 8 vorgesehen sein, die zur Erzeugung unterschiedlicher Greifdurchmesser auch in radialer Richtung verschiebbar gelagert sein kann. Hierzu kann die im Ausführungsbeispiel dargestellte Umlenkstelle für die elastischen Greifarme einen größeren Durchmesser aufweisen als die eigentliche Befestigungsstelle, wodurch eine entsprechend vergrößerte Durchmesserzuordnung der eigentlichen Greifarmöffnung möglich ist. Gemäß Figur 1 und 2 weist die Steuereinheit nur einen Steuemocken 6 auf, der in Rotationsrichtung vor dem Zentrum der von den Greifarmen 3 gebildeten Greifebene liegt, wobei diesem Steuemocken 6 ein zusätzliches Steuerelement 9 zugeordnet ist, welches beispielsweise V-förmig ausgebildet und ebenfalls an der Befestigungsstelle 4 gelagert ist. Dieses Steuerelement 9 weist auf der dem Steuemocken 6 gegenüberliegenden Seite ebenfalls eine Steuerfläche 10 auf, die an dem Außenmantel 11 des zweiten Greifarmes angreift und bei Betätigung des Steuemockens 6 automatisch mit gleichbleibender Geschwindigkeit und Wegführung an diesen herangeführt wird, so daß eine gleichmäßige Schließung beider Greifarme 3 vollzogen wird.

Alle Bauteile des Steuerelements 9 und der Steuereinheit sowie auch der Greifer 3 sind praktisch von oben aufsteckbar und auf einfache Weise durch eine Achse 12 mit Drehgriff 13 miteinander verbindbar. Die Ansteuerung des Steuemockens 6 erfolgt in bekannter Art, beispielsweise durch eine Anlaufkurve oder durch ansteuerbare Stößel, die eine entsprechende Umlenkung einer Schaltfahne des Steuemockens 6 vollziehen. Die Gegendruckstelle 8, auf der sich eine Verbiegung der Greifarme 3 vollziehen kann, ist zwischen Befestigungsstelle 4 und der Steuerfläche 10 angeordnet.

Figur 3 zeigt eine Variante zu Figur 2, wobei anstelle des Steuerelements 9 eine Federeinheit 14 vorgesehen ist. Die Steuemocken 6 werden dabei über eine Getriebeanordnung 15 vorzugsweise auf beiden Seiten gemeinsam angesteuert.

## Patentansprüche

1. Übergabestem zum Transportieren von Gefäßen mit einem sortierenden Haltekörper und daran austauschbar am Außenumfang befestigten elastischen Greifarmen, an denen eine deren Öffnungswinkel verändernde Steuereinheit angreift, ***dadurch gekennzeichnet*, daß** die Greifarme (3) eine zum Zentrum des Haltekörpers (1) weisende Befestigungsstelle (4) und von dieser auf Abstand in Richtung der Greiferenden angeordnete Steuerebene (5) aufweisen, wobei Steuemocken (6) von außen gegen die Greifarme (3) im Sinne einer Schließbewegung gegen diese heranführbar sind.

2. Übergabestern gemäß Oberbegriff des Anspruch 1, ***dadurch gekennzeichnet*, daß** die Greifarme (3) eine zum Zentrum des Haltekörpers (1) weisende Befestigungsstelle (4) und eine zwischen dieser und der Steuerfläche 10 angeordnete Gegendruckstelle (8) und von dieser auf Abstand in Richtung der Greifarmenden angeordnete Steuerebene (5) aufweisen, wobei mindestens ein Steuernocken (6) von außen gegen die Greifarme (3) im Sinne einer Schließbewegung gegen diese heranführbar sind.

3. Übergabestern nach den Ansprüchen 1 oder 2, ***dadurch gekennzeichnet,* daß** die Steuereinheit aus einem ansteuerbaren Steuemocken (6) besteht, der am Außenmantel (11) nur eines Greiferarmes (3) angreift.

4. Übergabestern nach den Ansprüchen 1 oder 2, ***dadurch gekennzeichnet,* daß** die Steuereinheit aus einem Steuemocken (6) besteht, der bei Verschwenken eines Greiferarmes (3) ein Steuerelement (9) für den zweiten Greiferarm (3) mitbetätigt.

5. Übergabestern nach den vorhergehenden Ansprüchen, ***dadurch gekennzeichnet,* daß** der Steuernocken (6) mit einer Steuerfläche an dem Außenmantel (11) eines Greifarmes (3) und mit einer weiteren Steuerfläche an einem Schenkel des Steuerelements (9) anliegt und der zweite Schenkel dieses Steuerelements mit seiner Steuerfläche an dem Außenmantel (11) des zweiten Greifarms (3) angreift, so daß bei Betätigung des Steuemockens (6) im Sinne einer Schließbewegung beide Greifarme (3) aufeinander zubewegt werden.

6. Übergabestern nach den vorhergehenden Ansprüchen, ***dadurch gekennzeichnet,* daß** das Steuerelement (9) V-förmig ausgebildet und mit seiner Spitze an der Befestigungsstelle (4) der Greifarme (3) gelagert ist.

7. Übergabestern nach den vorhergehenden Ansprüchen, ***dadurch gekennzeichnet,* daß** die Steuemocken (6) in Rotationsrichtung vor dem Zentrum der von den Greifarmen (3) gebildeten Greifebene liegen.

8. Übergabestem nach Anspruch 1, ***dadurch gekennzeichnet,* daß** beidseitig der Greifarme (3) Steuemocken (6) von außen gegen die Greifarme (3) im Sinne einer Schließbewegung an diese heranführbar sind und die Steuemocken (6) über eine Getriebeanordnung (15) miteinander in Wirkungsverbindung stehen.

9. Übergabestem nach Anspruch 8, ***dadurch gekennzeichnet,* daß** die Getriebeanordnung (15) als Zahngetriebe ausgebildet und mindestens ein Steuemocken (6) ansteuerbar ist.

10. Übergabestern nach Anspruch 2, ***dadurch gekennzeichnet,* daß** zwischen Befestigungsstelle (4) und Steuerebene (5) eine die Greiferarme (3) in Öffnungsstellung verbringende Federeinheit (14) angeordnet ist.

## Claims

1. Transfer-star for conveying containers, including a sorting retaining body and resilient gripping arms, which are mounted on the outer circumference of the sorting retaining body so as to be exchangeable, a control unit, which modifies the angular aperture between said gripping arms, engaging the gripping arms, **characterised in that** the gripping arms (3) have a mounting location (4), which points towards the centre of the retaining body (1), and control planes (5), which are disposed at a spacing from this mounting location (4) in the direction of the gripper ends, control cams (6) being introducible from externally towards the gripping arms (3) in the sense of a closing movement towards these gripping arms (3).

2. Transfer-star in accordance with the main preamble of claim 1, **characterised in that** the gripping arms (3) have a mounting location (4), which points towards the centre of the retaining body (1), and a counterpressure location (8), which is disposed between this mounting location (4) and the control face (10), and a control plane (5), which is disposed at a spacing from this mounting location (4) in the direction of the ends of the gripping arm, at least one control cam (6) being introducible from externally towards the gripping arms (3) in the sense of a closing movement towards these gripping arms (3).

3. Transfer-star according to claims 1 or 2, **characterised in that** the control unit consists of one controllable control cam (6), which engages the outer surface (11) of only one gripping arm (3).

4. Transfer-star according to claims 1 or 2, **characterised in that** the control unit consists of one control cam (6), which also actuates a control member (9) for the second gripping arm (3) on the pivoting of one gripping arm (3).

5. Transfer-star according to the preceding claims, **characterised in that** the control cam (6) abuts the outer surface (11) of a gripping arm (3) with one control face and a portion of the control member (9) with another control face, and the second portion of this control member engages the outer surface (11) of the second gripping arm (3) with its control face, such that when the control cam (6) is actuated, the two gripping arms (3) are moved towards each other in the sense of a closing movement.

6. Transfer-star according to the preceding claims, **characterised in that** the control member (9) is V-shaped and is mounted with its tip at the mounting location (4) of the gripping arms (3).

7. Transfer-star according to the preceding claims, **characterised in that** the control cams (6) lie, when viewed with respect to the direction of rotation, in front of the centre of the gripping plane formed by the gripping arms (3).

8. Transfer-star according to the preceding claims, **characterised in that** on both sides of the gripping arms (3) control cams (6) are introducible from externally towards the gripping arms (3) in the sense of a closing movement towards the gripping arms and the control cams (6) are operatively interconnected via a gearing arrangement (15).

9. Transfer-star according to claim 8, **characterised in that** the gearing arrangement (15) is in the form of toothed gearing and at least one control cam (6) is controllable.

10. Transfer-star according to claim 2, **characterised in that** a spring unit (14), which brings the gripping arms (3) into the open position, is disposed between mounting location (4) and control plane (5).

## Revendications

1. Etoile de transfert destinée à transporter des récipients, comprenant un corps de maintien trieur et des bras preneurs élastiques, fixés sur sa périphérie de façon interchangeable, sur lesquels s'applique une unité de commande qui modifie leur angle d'ouverture, ***caractérisée en ce que*** les bras preneurs (3) présentent un point de fixation (4) orienté vers le centre du corps de maintion (1) et un plan de commande (5) espacé de celui-ci en direction des extrémités des bras preneurs, des cames de commande (6) pouvant être amenées, de l'extérieur, contre les bras preneurs (3), dans le sens d'un mouvement de fermeture contre ces bras.

2. Etoile de transfert selon le préambule de la revendication 1, ***caracrérisée en ce que*** les bras preneurs (3) présentent un point de fixation (4) orienté en direction du centre du corps de maintien (1) et un point de contre-pression (8) placé entre celui-ci et la surface de commande (10), ainsi qu'un plan de commande (5) espacé de celui-ci en direction des extrémités des bras preneurs, au moins une came de commande (6) pouvant être amenée, de l'extérieur, contre les bras preneurs (3), dans le sens d'un mouvement de fermeture contre ces bras.

3. Etoile de transfert selon les revendications 1 ou 2, ***caractérisée en ce que*** l'unité de commande est constituée d'une came de commande (6) susceptible d'être actionnée, qui s'applique sur la surface latérale (11) d'un bras preneur (3) seulement.

4. Etolle de transfert selon les revendications 1 ou 2, ***caractérisée en ce que*** l'unité de commande est constituée d'une came de commande (6) qui, lorsqu'un bras preneur (3) pivote, actionne un élément de commande (9) destiné au deuxième bras preneur (3).

5. Etoile de transfert selon les revendications précédentes, ***caractérisée en ce que*** la came de commande (6) s'applique, par une surface de commande, sur la surface latérale (11) d'un bras preneur (3) et, par une autre surface de commande, sur un bras de l'élément de commande (9), et **en ce que** la deuxième branche de cet élément de commande s'applique, par sa surface de commande, sur la surface latérale (11) du deuxième bras preneur (3) de sorte que, lorsque la came de commande (6) est actionnée dans le sens d'un mouvement de fermeture, les deux bras preneurs (3) sont déplacés l'un en direction de l'autre.

6. Etoile de transfert selon les revendications précédentes, ***caracterisee en ce que*** l'élément de commande (9) présente une forme de V et est monté, par sa pointe, sur le point de fixation (4) des bras preneurs (3).

7. Etoile de transfert selon les revendicatlons précédentes, ***caractérisée en ce que*** les cames de commande (6) sont placées, suivant la direction de rotation, devant le centre du plan de préhension constitué par les bras preneurs (3).

8. Etoile de transfert selon la revendication 1, ***caractérisée en ce que,*** de part et d'autre des bras preneurs (3), des cames de commande (6) peuvent venir s'appliquer, de l'extérieur, contre les bras preneurs (3), dans le sens d'un mouvement de fermeture, et **en ce que** les cames de commande (6) se trouvent en liaison fonctionnelle grâce à la présence d'un mécanisme (15) de transmission.

9. Etoile de transfert selon la revendication 8, ***caractérisée en ce que*** le mécanisme de transmissivn (15) est conformé en engrenage et **en ce qu'**au moins une came de commande (6) est susceptible d'être commandée.

10. Etoile de transfert selon la revendication 2, ***caractérisée en ce qu***'est disposé, entre le point de fixation (4) et le plan de commande (5), une unité à ressorts (14) qui fait passer les bras preneurs (3) en position d'ouverture.
